# EUROPÄISCHE PATENTANMELDUNG

(11) **EP 0 563 934 A1**
(43) Veröffentlichungstag der Anmeldung: **06.10.1993**
(21) Anmeldenummer: 93105362.3
(22) Anmeldetag: 31.03.1993
(51) Int. Cl.: B65D 75/34, B29C 67/00

(54) **Blisterstreifen aus Kunststoff-Folien mit Doppel-bzw. Mehrfachdosierung.**

(30) Priorität: 03.04.1992 DE 4211111
(71) Anmelder: Dr. Karl Thomae GmbH, D-88397 Biberach (DE)
(72) Erfinder: Eggert, Heinrich, Dipl.-Ing., W-7931 Oberstadion (DE); Schwartz, Hans, W-7951 Warthausen (DE); Müller, Matthäus, W-7951 Tannheim (DE)

(57) **Zusammenfassung**

Die Erfindung bezieht sich auf einen Blisterstreifen aus Kunststoff-Folien für Doppel- oder Mehrfachdosierung mit darin geformten Näpfen, wobei die die Seitenwandung (1) bildende Folie dünner ist als die den Napfboden (5) bildende Folie und die Höhe der Seitenwandung mindestens der Summe der Höhen der im Napf untergebrachten Formlinge entspricht, wobei nach Entnahme des ersten Formlings (4) durch Druck auf den Napfboden das sich bildende überschüssige Folienmaterial der Seitenwand (1) des Blisternapfes sich wulstartig bzw. faltenbalgartig vor den nächsten Formling (2) legt und diesen gegen ein unbeaufsichtigtes Herausfallen aus dem Blisternapf schützt. Der wulstartige Verschluß in Form eines Faltenbalges läßt sich durch verstärkten Druck auf den Napfboden zur Freigabe des nächsten Formlings überwinden. Der Blisterstreifen läßt sich durch Kalttiefziehen von Polypropylen-Folien oder Kunststoff-Folien mit ähnlichen mechanischen Eigenschaften herstellen.

## Beschreibung

Die Erfindung bezieht sich auf einen Blisterstreifen aus Kunststoff-Folien, z. B. aus Polypropylen-Folien oder Kunststoff-Folien mit ähnlichen mechanischen Eigenschaften, mit Doppel- bzw. Mehrfachdosierung in einem Napf und dessen Herstellung.

Bislang bekannte Blisterstreifen dienen in der Pharmazie als Behältnisse zur Unterbringung pharmazeutischer Produkte, wie Tabletten, Dragees und Kapseln.

In diesen Blisterstreifen, die mindestens mit einem Napf ausgebildet sind, befinden sich die oben erwähnten Produkte, mit einer Deckfolie dicht verschlossen. Die Blisterstreifen haben die Aufgabe, das im Napf befindliche Produkt vor allen möglichen Umwelteinflüssen, wie Wasser, Wasserdampf und vor jeglichem Schmutz zu schützen, um dem Verbraucher die Garantie für die angegebene Haltbarkeit und Originalität des verpackten Produktes zu gewährleisten.

Die im Handel befindlichen Blisterstreifen für pharmazeutische Produkte beinhalten in der Regel jeweils pro Napf eine Tablette, Dragee oder Kapsel. Jedes Produkt beansprucht hierfür eine bestimmte Fläche an Folienmaterial für dessen sichere Unterbringung.

In der Verpackungsindustrie werden für die Verpackung dieser Produkte große Mengen an entsprechender Folie verarbeitet.

Die entleerten Blisterstreifen müssen irgendwie sinnvoll recyclebar entsorgt werden.

Um die Flut dieses recyclebaren Materials einzudämmen und zugleich die Kosten für die benötigte Folie auf mindestens die Hälfte zu reduzieren, wurde die neue Verpackung konzipiert.

In der DE-36 23 331 werden Konfektionspackungen, z. B. Blisterpackungen mit Kammern, die mindestens zwei feste, nicht mechanisch verbundene Dosierungseinheiten von verschiedenen Arzneimitteln enthalten, beschrieben. Um eine Verwechslungsgefahr bei der Einnahme zu vermeiden, unterscheiden sich die Dosiereinheiten erkennbar, beispielsweise in Größe, Form oder Färbung, und die Dosierungsformen sind durch die räumliche Gestaltung, beispielsweise durch eine stegartige Aufwölbung oder durch zusätzliche Folien, voneinander getrennt.

In der DE-15 44 098 werden Blisterpackungen für Tabletten mit einem beigeordneten wasserentziehenden Element beschrieben, wobei durch einen Einzug oder eine Verengung in der Seitenwandung des Napfes das wasserentziehende Element, beispielsweise eine Pastille, unterhalb der Tablette beabstandet gehaltert wird. Der Durchmesser des Napfes ist im unteren Bereich, in dem sich das wasserentziehende Element befindet, kleiner als im oberen Bereich, in dem sich die Tablette befindet, und die Tablette ist von dem wasserentziehenden Element durch ein wasserdurchlässiges Papier- oder Kartonstück getrennt.

In der DE-14 86 408 werden Aufreißpackungen für Tabletten oder Dragees beschrieben, bestehend aus einem Aufnahmeteil welches tiefgezogene oder gedrückte Taschen für die Aufnahme der zu verpackenden Formstücke enthält und welches nach außen durch eine Deckfolie verschlossen ist. Die Tabletten oder Dragees sind auf der Deckfolie oder im Aufnahmeteil durch Klebung oder mittels einer mechanischen Halterung befestigt und die Deckfolie kann nach Entnahme eines oder mehrerer Stück jeweils wieder in die schließende Ausgangslage zurückgebracht werden. Die Seitenwandungen der Näpfe des Aufnahmeteils können elastische Einschnürungen zur mechanischen Halterung der Tabletten aufweisen.

Der vorliegenden Erfindung liegt die Aufgabe zugrunde, daß mit derselben, gleich großen Folienfläche die doppelte oder eine mehrfache Menge speziell an Tabletten oder Dragees untergebracht werden kann, wobei die Tabletten oder Dragees einzeln dosierbar sind.

Werden zum Beispiel zwei der oben genannten Produkte in einem Napf untergebracht, so wird die Hälfte der Folie eingespart.

Um dieses Ziel zu erreichen besitzen die in einem Blisterstreifen geformten bzw. gezogenen Näpfe gleichmäßig glatt geformte Seitenwandungen (1) und Napfböden (5), wobei die Näpfe jeweils mindestens zwei übereinander gelagerte sich gegebenenfalls berührende Formlinge enthalten, die Höhe der Seitenwandungen mindestens der Summe der jeweils in einem Napf unterzubringenden Formlinge entspricht und die Näpfe keine vorgeformten Rückhaltevorrichtungen für unterhalb des obersten Formlings liegende weitere Formlinge aufweisen, dadurch gekennzeichnet, daß die die Seitenwand (1) bildende Folienpartie dünner ist als die Folienwandung des Napfbodens (5), vorzugsweise drei bis zehnmal dünner, und daß das beim Zusammenschieben des bei der Entnahme des obenliegenden Formlings durch Druck auf den Napfboden (5) überschüssig werdende Folienmaterial sich wulstartig in Form eines Faltenbalges vor den nächsten im Blisternapf verbleibenden Formling legt, wodurch dieser Formling im Blisternapf zurückgehalten wird, und der wulstartige Verschluß (6) zur Freigabe auch des so zurückgehaltenen Formlings (2) durch einen verstärkten Druck überwindbar ist.

Die Dicke des Napfbodens richtet sich nach der Dicke der zur Herstellung der Blisterstreifen verwendeten Folienbahnen aus und ist aus fertigungstechnischen Gründen im allgemeinen um 5 bis 20% dünner als die Dicke der eingesetzten Folienbahn.

Wird ein solcher Napf mit zwei oder mehreren Formstücken, vorzugsweise jedoch mit zwei gleichartig geformten Formlingen desselben Arzneimittels, z. B. Tabletten, gefüllt und mit einer ausdrückbaren Deckfolie nach außen abgeschlossen, so läßt sich ein Formstück in Einzeldosierung durch Druck auf den Napfboden deshalb entnehmen, weil das darunter liegende Formstück durch Bildung eines wulstartigen Faltenbalges im Bereich der Napföffnung festgehalten wird. Erst durch weiteren verstärkten Druck auf den Napfboden wird auch die Freisetzung des jeweils nächsten Formkörpers herbeigeführt. Dies kommt im einzelnen dadurch zustande, daß bei weiterem Druck auf den Napfboden der überschüssig gewordene Teil der Seitenwandung in Richtung auf die Napföffnung gedrängt wird und in diesem Bereich eine rundumlaufende Sperre bzw. einen ringförmigen, wulstartigen Folienstau in Form eines Faltenbalges bildet, der die Freigabe des nachfolgenden Formkörpers zunächst verhindert. Soll dieser Formkörper ebenfalls freigesetzt werden, so ist der Druck auf den Napfboden so-weit zu erhöhen, daß diese Sperre überwunden wird. Hierdurch wird aber die getrennte Entnahme eines jeden einzelnen Formstückes gewährleistet.

Der Napfboden kann der Oberflächenform des Produktes angepaßt sein, er ist bei planaren Füllkörper, z. B. Tabletten, vorzugsweise planar, bei Füllkörpern mit gewölbter Oberfläche vorzugsweise aber an diese Wölbung angepaßt.

Die Seitenwandung des Napfes ist vorzugsweise konisch ausgeformt und kann an die Geometrie des Füllkörpers angepaßt sein, z. B. ist die Seitenwandung rundumlaufend bei runden Tabletten, bei Oblong-Tabletten oder Kapseln verläuft sie entsprechend der Längsachse des jeweiligen Formstückes. Bei kubischen Formkörpern ist die Seitenwandung vorteilhafterweise dem Kubus angepaßt.

Als Deckfolien dienen Blattmetallfolien (z. B. aus Aluminium) oder berstbare Kunststoff- sowie entsprechende Papier-Folien, die ausdrückbar sind.

Die erfindungsgemäßen Blisterstreifen können durch Kaltverformung von Kunststoff-Folien, insbesondere durch Kalttiefziehen von Polypropylen-Folien oder Kunststoff-Folien mit äquivalenten mechanischen Eigenschaften, hergestellt werden.

Bei der herkömmlichen Herstellung von Blisterstreifen durch Tiefziehen des Folienmaterials unter Warmverformung werden Napf-Formen ausgebildet, die einen im Vergleich zur Dicke der Seitenwandungen dünnen Napfboden besitzen. Dabei wird eine zwischen einem Formstempel und einer im Durchmesser auf den Formstempel abgestimmten Lochmatrize fixierte Folie erhitzt und die Formgebung durchgeführt, indem die Lochmatrize in Richtung des Formstempels, oder umgekehrt, gedrückt wird. Das die Seitenwandungen des Napfes ausbildende Folienmaterial entstammt bei diesem Formgebungsprozeß fast ausschließlich der anschließend den Napfboden bildenden Folienpartie, da die gesamte Projektionsfläche der Blisternapföffnung auf die ursprüngliche Folienbahn zur Verformung zur Verfügung stand. Die Seitenwandungen der so thermisch geformten Blisternäpfe sind somit zwangsweise dicker und weniger flexibel als die Seitenwandungen der erfindungsgemäßen Blisternäpfe, sodaß durch Druck auf den Napfboden eines thermisch geformten Blisternapfes kein wie vorstehend beschriebener wulstartiger Verschluß in Form eines Faltenbalges ausgebildet wird.

Bei der Herstellung des erfindungsgemäßen Blisterstreifens durch Kalttiefziehen von Kunststoff-Folien wird dagegen ganz überwiegend diejenige Folienpartie der Ausgangsfolie verformt, die die Projektionsfläche des Zwischenraumes zwischen der Außenkante der Matrizenschulter der verwendeten Lochmatrize und des zentrisch im Eingriff zur Lochmatrize angeordneten Verformungsstempels darstellt (vgl. Figur IV und V). Durch Variation des Durchmessers der Matrizenbohrung im Verhältnis zum Durchmesser des Verformungsstempels können auf diese Weise Blisternäpfe mit unterschiedlicher Dicke der Seitenwandungen hergestellt werden, wobei die Seitenwandungen dünner sind als die Wandungen des Napfbodens, vorzugsweise drei- bis zehnmal dünner, und die Dicke des Napfbodens gegenüber der Dicke der ursprünglichen Folienbahn nur geringfügig, vorzugsweise um 5 bis 20%, verringert ist, und die durch Druck auf den Napfboden zur Ausbildung des vorstehend beschriebenen wulstartigen Verschlusses in Form eines Faltenbalges befähigt sind.

Zur Herstellung der erfindungsgemäßen Blisterstreifen eignen sich Kunststoff-Folien aus Polypropylen oder Kunststoff-Folien mit äquivalenten mechanischen Eigenschaften. Vorzugsweise werden jedoch Polypropylen-Folien verwendet, die eine Dicke von 150 bis 350 µm, eine Reißfestigkeit in Längs- und Querrichtung von jeweils mindestens 20 N/mm² und eine Reißdehnung in Längs- und Querrichtung von jeweils mindestens 800 % besitzen. Besonders bevorzugt werden Polypropylen-Tiefziehfolien mit einer Dicke von 200 bis 300 µm, einer Reißfestigkeit in Längs- und Querrichtung von jeweils 25 bis 40 N/mm² und einer Reißdehnung in Längs- und Querrichtung von jeweils 900 bis 1400 % verwendet.

Die erfindungsgemäßen Blisterstreifen können durch Anwendung eines Kalttiefziehverfahrens aus Kunststoff-Folien hergestellt werden, indem die Kunststoff-Folien bei Raumtemperatur, also ohne vorhergehendes Anwärmen des Materials, ohne Benutzung eines Gegenstempels durch Druck verformt werden. Dabei wird zweckmäßigerweise ein Stempel mit einer zentralen Bohrung verwendet, dessen Innenhohlraum nach außen mit einer oder mehreren Querbohrungen verbunden ist, und der mit der Matrizenbohrung einer Lochmatrize, deren Bohrungsdurchmesser größer ist als der Außendurchmesser des Stempels, zentrisch im Eingriff steht. Der Innenhohlraum in Verbindung mit den Querbohrungen garantiert während des gesamten Preßvorganges einen stetigen Druckausgleich mit der Umgebung. Durch das Vorhandensein des belüfteten Innenhohlraumes im Stempel und durch die Verwendung einer Lochmatrize treten während des Tiefziehvorganges im verformten Folienbereich keine Druckunterschiede auf. Beim Abstreifen des Formlings vom Formstempel entsteht kein auf den Formling deformierend wirkender Sog.

Die Lochmatrize weist eine mit einem Radius abgerundete glatte, gegebenenfalls polierte, Matritzenschulter auf, wobei die Matrizenschulter entweder direkt oder mit einer Abstufung in die Matrizenbohrung übergeht, sodaß im letzteren Fall die Matrizenbohrung unterhalb der Matrizenschulter einen größeren Durchmesser als im Bereich der Matrizenschulter besitzt.

Beim Verformungsvorgang genügt es, wenn ein Verformungselement (z. B. die Lochmatrize), gegen das andere (z. B. den Formstempel) bewegt wird. Es ist aber von Vorteil, wenn die Lochmatrize gegen den Formstempel bewegt wird, da an der Lochmatrize Befestigungselemente zur Fixierung der Lauffolien besser angebracht werden können.

Die Figuren I bis III sollen das Wesen der Erfindung näher erläutern:
In Figur I wird schematisch im Querschnitt ein herkömmlicher Blisternapf mit einfacher Dosierung dargestellt.

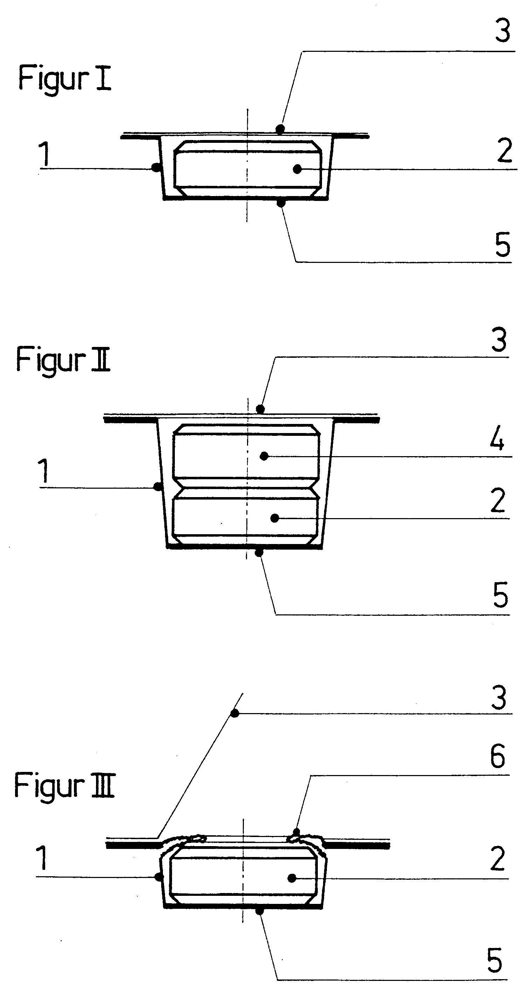

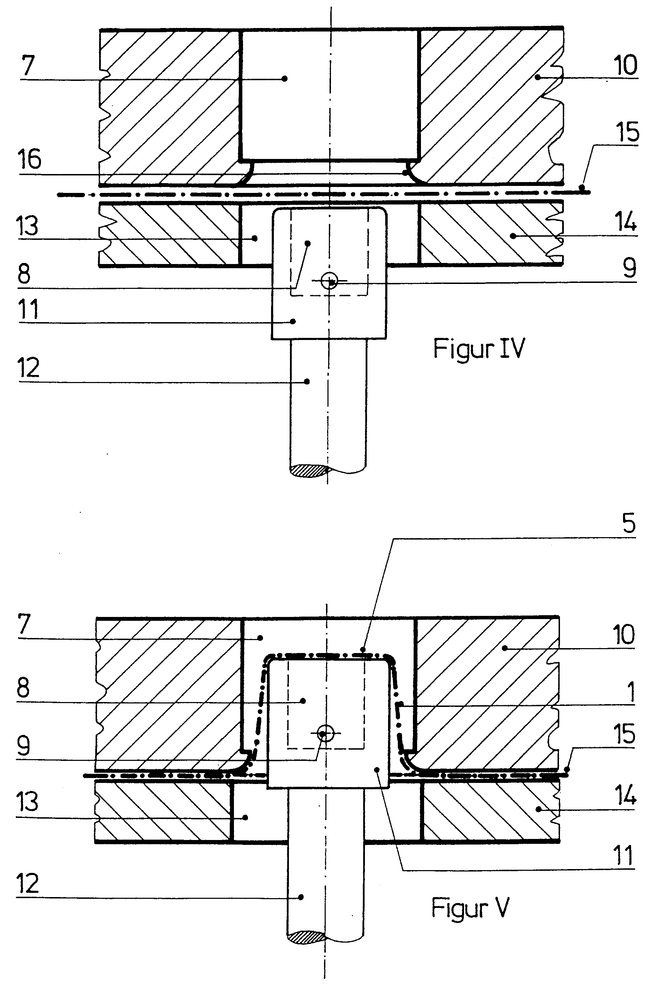

Die Figur II zeigt den Querschnitt eines Blisternapfes mit Doppeldosierung bei gleichem Napfdurchmesser wie bei Figur I, aber doppelter Napftiefe entsprechend der Erfindung.

In Figur III ist der Blisternapf mit doppelter Napftiefe im Querschnitt dargestellt; es ist jedoch bereits 1 Tablette aus dem Blisternapf mittels Druck auf den Napfboden entnommen.

In Figur I ist (1) die Seitenwandung eines normalgezogenen Blisternapfes, (2) das eingelegte Produkt (Tablette), (3) die Deck- oder Verschlußfolie auf dem Blisternapf, (5) ist der Napfboden des Blisternapfes.

In Figur II ist (1) die Seitenwandung des doppelt so tief gezogenen Blisternapfes, (2) und (4) sind zwei eingelegte Tabletten, (3) ist die Verschlußfolie auf dem Blisternapf (1) und (5) der Napfboden mit einer Dicke des Materials, die um 5 bis 20 % geringer ist als die Dicke der zur Herstellung des Blisternapfes verwendeten Folienbahn.

In Figur III ist (1) der Blisternapf nach Entnahme der ersten Tablette (4), (6) ist die durch Druck auf den Napfboden (5) gebildete wulstförmige, faltenbalgartige Verengung der ursprünglichen Napföffnung des Blisternapfes (1). (3) stellt die im Bereich des Napfes infolge der Entnahme der ersten Tablette (4) ausgedrückte Deckfolie dar.

Wie sich aus der Figur III ergibt, legt sich nach der Entnahme eines Formlings (z. B. Tablette) das überschüssige Folienmaterial der ursprünglich doppelt so hohen Seitenwandung (1) der Figur II wulstartig in Form eines Faltenbalges vor den zweiten Formling (2) (z. B. Tablette), der nach der Entnahme des ersten Formlings (4) im Blisternapf verblieb. Dieser im Blisternapf verbleibende Formling (2) ist dadurch gegen ein unbeabsichtigtes Herausfallen aus dem Blisternapf geschützt. Bei weiterem Druck auf den Napfboden (5) wird der Widerstand des faltenbalgartigen Verschlußes (6) überwunden und somit der zweite Formling (2) freigegeben.

In den Schnittzeichnungen der Figuren IV und V ist die Herstellungsweise des beschriebenen Blisternapfes sinngemäß dargestellt. In Figur IV ist (10) die Lochmatrize, (7) die Matrizenbohrung und (16) die mit einem Radius abgerundete Matrizenschulter, die in die Matrizenbohrung (7) der Lochmatrize (10) übergeht. (14) ist der Niederhalter und (13) die Niederhalterbohrung. Zwischen dem Niederhalter (14) und der Lochmatrize (10) liegt die eingespannte Kunststoff-Folie (15). Der Verformungsstempel (11) sitzt zentrisch auf dem Stempelhalter (12), dessen Innenhohlraum (8) nach außen mit einer oder mehreren Querbohrungen (9) verbunden ist. In Figur V ist die Endphase des Kalttiefziehens eines Blisternapfes aufgezeigt. Die Planfolie (15) aus Polypropylen oder einer äquivalenten Folie ist zwischem dem Niederhalter (14) und der Lochmatrize (10) fest eingeklemmt. Wie aus Figur V zu entnehmen ist, wird die planliegende Kunststoff-Folie (15) durch den Verformungsstempel (11) über die Matrizenschulter (16) in die Matrizenbohrung (7) hineingedrückt. Die Form des Blisternapfes, wie sie der Figur V zu entnehmen ist, ist dadurch gekennzeichnet, daß die Planfolie (15) zwangsweise über die Matrizenschulter (16) unter Druckaufwand in die Lochmatrize (10) hineingedrückt wird. Die Matrizenbohrung (7) ist in ihrem Durchmesser größer als der Verformungsstempel (11). Die Konizität des Blisternapfes ist bedingt durch das Verhältnis der beiden Durchmesser von Matrizenschulter (16) und dem Durchmesser des Verformungsstempel (11).

Beim Kalttiefziehvorgang wird zunächst eine Folie (15) zwischen Niederhalter (14) und Lochmatrize (10) eingefahren. Der Niederhalter (14) ist so hochgezogen, daß die Folie (15) über dem Formstempel (11) liegt. Die Verformung tritt dadurch ein, daß die Lochmatrize (10) auf den Niederhalter (14) drückt und beide Elemente mit der gespannten Folie (15) über den Formstempel (11) gleiten, vorzugsweise mit reduzierter Geschwindigkeit. Der hierbei gebildete Formling (1) wird dadurch befreit, daß die Lochmatrize (10) und der Niederhalter (14) vom Formstempel (11) zurückgezogen werden, und zwar die Lochmatrize in einem größeren Ausmaß, so daß der auf dem Niederhalter aufliegende Formling freiliegt und damit seitwärts zwischen Niederhalter und Lochmatrize abgezogen werden kann.

Die Blisterpackung gemäß vorliegender Erfindung bewirkt, daß bei einer Doppeldosierung an Tabletten oder dergleichen mindestens die Hälfte der Tiefziehfolie eingespart wird, die normalerweise für den Verpackungsaufwand in Tiefziehblistern mit Einfachdosierung erforderlich ist, und desweiteren, daß die Deckfolie (3) bei einer Doppeldosierung um die Hälfte reduziert wird.

## Patentansprüche

1. Blisterstreifen aus Kunststoff-Folien für Doppel- oder Mehrfachdosierung mit darin geformten Näpfen mit gleichmäßig glatt geformten Seitenwandungen (1) und Napfböden (5), wobei die Näpfe jeweils mindestens zwei übereinander gelagerte sich gegebenenfalls berührende Formlinge enthalten, die Höhe der Seitenwandungen mindestens der Summe der jeweils in einem Napf unterzubringenden Formlinge entspricht und die Näpfe keine vorgeformten Rückhaltevorrichtungen für unterhalb des obersten Formlings liegende weitere Formlinge aufweisen, dadurch gekennzeichnet, daß die die Seitenwand (1) bildende Folienpartie dünner ist als die Folienwandung des Napfbodens (5) und daß das beim Zusammenschieben des bei der Entnahme des obenliegenden Formlings durch Druck auf den Napfboden (5) überschüssig werdende Folienmaterial sich wulstartig in Form eines Faltenbalges vor den nächsten im Blisternapf verbleibenden Formling legt, wodurch dieser Formling im Blisternapf zurückgehalten wird, und der wulstartige Verschluß (6) zur Freigabe auch des so zurückgehaltenen Formlings (2) durch einen verstärkten Druck überwindbar ist.

2. Blisterstreifen gemäß Anspruch 1, dadurch gekennzeichnet, daß die die Seitenwandung (1) bildende Folienpartie drei- bis zehnmal dünner ist als die Folienwandung des Napfbodens (5).

3. Blisterstreifen gemäß den Ansprüchen 1 oder 2, dadurch gekennzeichnet, daß die Dicke des Napfbodens (5) um 5 bis 20% geringer ist als die Dicke der zur Herstellung der Blisterstreifen eingesetzten Folienbahn.

4. Blisterstreifen gemäß einem der Ansprüche 1 bis 3, dadurch gekennzeichnet, daß die Seitenwandungen (1) konisch geformt sind.

5. Blisterstreifen gemäß einem der Ansprüche 1 bis 4, dadurch gekennzeichnet, daß die Näpfe zwei gleichartig geformte Formlinge desselben Arzneimittels enthalten.

6. Blisterstreifen gemäß einem der Ansprüche 1 bis 5, dadurch gekennzeichnet, daß die Deckfolie (3) auf dem Blisternapf durch Druck auf den Napfboden (5) ausdrückbar ausgestaltet ist.

7. Blisterstreifen gemäß einem der Ansprüche 1 bis 6, dadurch gekennzeichnet, daß die Kunststoff-Folie aus Polypropylen oder einem Kunststoff mit äquivalenten mechanischen Eigenschaften besteht.

8. Blisterstreifen gemäß Anspruch 7, dadurch gekennzeichnet, daß die Kunststoff-Folie aus Polypropylen besteht.

9. Blisterstreifen gemäß Anspruch 7, dadurch gekennzeichnet, daß die zur Herstellung des Blisterstreifen verwendete Polypropylen-Folie eine Dicke von 150 bis 350 µm besitzt.

10. Blisterstreifen gemäß Anspruch 7, dadurch gekennzeichnet, daß die zur Herstellung des Blisterstreifen verwendete Polypropylen-Folie eine Dicke von 200 bis 300 µm besitzt.

11. Blisterstreifen gemäß einem der Ansprüche 8 bis 10, dadurch gekennzeichnet, daß das Polypropylen eine Reißfestigkeit in Längs- und Querrichtung von jeweils mindestens 20 N/mm² und eine Reißdehnung in Längs- und Querrichtung von jeweils mindestens 800 % besitzt.

12. Blisterstreifen gemaß einem der Ansprüche 8 bis 10, dadurch gekennzeichnet, daß das Polypropylen eine Reißfestigkeit in Längs- und Querrichtung jeweils von 25 bis 40 N/mm² und eine Reißdehnung in Längs- und Querrichtung jeweils von 900 bis 1400 % besitzt.

13. Blisterstreifen gemaß einem der Ansprüche 1 bis 12, dadurch gekennzeichnet, daß die Näpfe durch Anwendung eines Kalttiefziehverfahrens aus Kunststoff-Folien hergestellt werden.

14. Verfahren zum Kalttiefziehen von Kunststoff-Folien ohne Vorwärmung, wobei die zu verformende Folie (15) zwischen einer Lochmatrize (10) und einem Niederhalter (14) ein-gefahren und festgeklemmt wird, anschließend die Lochmatrize (10) zusammen mit dem Niederhalter (14) in Richtung eines Formstempels (11) mit Innenhohlraum (8) und Querbohrungen (9) gedrückt und damit die Formgebung durchgeführt wird, hernach die Lochmatrize (10) wieder zurückgezogen und der Niederhalter (14) soweit zurückgefahren wird, daß der Formling (1) hierbei vom Formstempel (11) frei abgezogen werden kann, dadurch gekennzeichnet, daß die Lochmatrize (10) eine mit einem Radius abgerundete glatte, gegebenenfalls polierte, Matritzenschulter aufweist, wobei die Matrizenschulter entweder direkt oder mit einer Abstufung in die Matrizenbohrung übergeht, sodaß im letzteren Fall die Matrizenbohrung unterhalb der Matrizenschulter einen größeren Durchmesser als im Bereich der Matrizenschulter besitzt, die Matrizenbohrung (7) in ihrem Durchmesser größer ist als der Verformungsstempel (11) und die planliegende Kunststoff-Folie (15) durch den Verformungsstempel (11) über die Matrizenschulter (16) in die Lochmatrize (10) hineingedrückt wird.

15. Werkzeuge zum Kalttiefziehen von Kunststoff-Folien ohne Vorwärmung bestehend aus einem Formstempel (11), einem Niederhalter (14) und einer Lochmatrize (10), wobei der Formstempel (12) eine Innenhohlraum (8) aufweist, der mit einer oder mehreren Querbohrungen nach außen verbunden ist, der Bohrungsdurchmesser der Matrizenbohrung (7) der Lochmatrize (10) größer ist als der Außendurchmesser des Formstempels (12) und der Formstempel (12) zentrisch mit der Matrizenbohrung (7) der Lochmatrize (10) im Eingriff steht, dadurch gekennzeichnet, daß die Lochmatrize (10) eine mit einem Radius abgerundete glatte, gegebenenfalls polierte, Matritzenschulter aufweist, wobei die Matrizenschulter entweder direkt oder mit einer Abstufung in die Matrizenbohrung übergeht, sodaß im letzteren Fall die Matrizenbohrung unterhalb der Matrizenschulter einen größeren Durchmesser als im Bereich der Matrizenschulter besitzt.
